# EUROPÄISCHE PATENTSCHRIFT

(11) **EP 1 728 574 B1**
(45) Veröffentlichungstag und Bekanntmachung des Hinweises auf die Patenterteilung: **09.07.2008**
(21) Anmeldenummer: 06113512.5
(22) Anmeldetag: 04.05.2006
(51) Int. Cl.: B23B 31/28

(54) **Spannvorrichtung einer Werkzeugmaschine**
Clamping device for a machine tool
Dispositif de serrage pour machine outil

(30) Priorität: 03.06.2005 DE 102005025538
(43) Veröffentlichungstag der Anmeldung: 06.12.2006
(73) Patentinhaber: Berg & Co. GmbH, 33689 Bielefeld (DE)
(72) Erfinder: Prischmann, Gerhard, 33758 Schloß Holte-Stukenbrock (DE)
(74) Vertreter: Dantz, Jan Henning

(56) Entgegenhaltungen:
- EP-A- 1 114 685
- WO-A-20/06034869
- US-A- 4 573 379
- US-B1- 6 302 006

## Beschreibung

Die vorliegende Erfindung betrifft eine Spannvorrichtung einer Werkzeugmaschine mit einem durch einen Elektromotor betätigbaren Spannantrieb zur axialen Verschiebung eines eine elektromotorisch antreibbare Maschinen-Hohlspindel durchtretenden Hohlschaftes, der innerhalb der Maschinen-Hohlspindel verdrehsicher, aber axial verschiebbar gelagert ist, wobei der Hohlschaft über eine Gewindespindel axial verstellbar und die Gewindespindel über den Elektromotor antreibbar ist, dessen Stator ortsfest und dessen umlaufender und die Gewindespindel antreibender Rotor mit dem elektromotorischen Antrieb der Maschinen-Hohlspindel synchronisiert ist.

Spannvorrichtungen der gattungsgemäßen Art sind beispielsweise aus der US-B1-6 302 006 oder der WO 2006/034869 A bekannt.

Bei beiden Spannvorrichtungen der bekannten Art liegen dabei die Drehachsen der Gewindespindel und des Elektromotors in einer Flucht.

Der vorliegenden Erfindung liegt die Aufgabe zugrunde, eine verbesserte Ausführungsform einer Spannvorrichtung zu schaffen, welche ausschließlich die Bereitstellung elektrischer Energie erfordert und bei der die Spannkraft praktisch unabhängig ist von den Beschleunigungskräften des elektromotorischen Antriebes der Maschinen-Hohlspindel.

Diese Aufgabe wird erfindungsgemäß dadurch gelöst, dass die Drehachsen der Gewindespindel und des Elektromotors parallel gegeneinander verschoben sind und dass zwischen dem Elektromotor und der Gewindespindel ein Riementrieb, vorzugsweise ein Zahnriementriebantrieb, vorgesehen ist.

Durch diese konstruktive Ausgestaltung wird es möglich, eine freie Durchgangsbohrung durch das Zentrum der Maschinen-Hohlspindel zu erreichen und der Elektromotor zum Antrieb der Gewinde-Hohlspindel kann bei entsprechend beengten Raumverhältnissen auch gegenüber dem unmittelbaren Montagebereich zur Gewindespindel versetzt angeordnet sein. Mit anderen Worten wird hier eine flexiblere Konstruktion der Spannvorrichtung erreicht, um diese Spannvorrichtung den baulichen Gegebenheiten einer Werkzeugmaschine anpassen zu können.

Weitere Merkmale der Erfindung sind Gegenstand von Unteransprüchen.

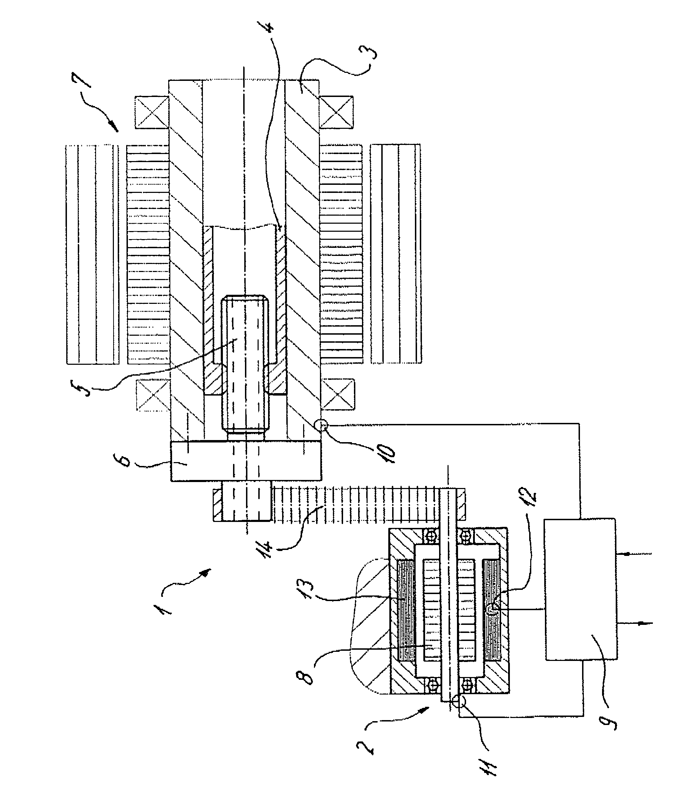

Ein Ausführungsbeispiel der Erfindung ist in der beigefügten Zeichnung dargestellt und wird im Folgenden näher beschrieben.

Die einzige Figur zeigt einen schematisch dargestellten Schnitt durch eine erfindungsgemäße Spannvorrichtung.

In der Zeichnung ist mit dem Bezugszeichen 1 insgesamt eine Spannvorrichtung einer Werkzeugmaschine bezeichnet.

Die Spannvorrichtung 1 ist mit einem durch einen Elektromotor 2 betätigbaren Spannantrieb zur axialen Verschiebung eines eine etektromotorisch antreibbaren Maschinen-Hohlspindel 3 durchtretenden Hohlschaftes 4 ausgestattet, wobei der Hohlschaft 4 innerhalb der Maschinen-Hohlspindel 3 verdrehsicher, aber axial verschiebbar gelagert ist.

Durch den axial verschiebbaren Hohlschaft 4 kann in an sich bekannter und deshalb nicht weiter dargestellter Weise eine Spanneinrichtung zur Aufnahme eines Werkstückes oder eines Werkzeuges mit der Maschinen-Hohlspindel 3 verbunden werden.

Zur axialen Verschiebung des Hohlschaftes 4 dient eine Gewindespindel 5, welche über den Elektromotor 2 und ein zwischengeschaltetes Getriebe 6 antreibbar ist.

Der Hohlschaft 4 und die Gewindespindel 5 wirken prinzipiell zusammen in der Art eines Gewindespindel-Antriebes, wobei der Hohlschaft 4 als Spindelmutter angesehen werden kann, die bei Verdrehen der Gewindespindel 5 aufgrund ihrer verdrehsicheren Lagerung innerhalb der Maschinen-Hohlspindel 3 axial auf der Gewindespindel 5 verschoben wird, wobei die Verschieberiehtung hier abhängig ist von der Drehrichtung der Gewindespindel 5. Mit anderen Worten kann der Hohlschaft 4 durch die Gewindespindel 5 aus der Zeichnungslage heraus sowohl nach rechts wie auch nach links verschoben werden. Diese axiale Verschiebung führt zum Öffnen oder Schließen bzw. zum Spannen oder Lösen der angegebenen, aber nicht weiter dargestellten Spanneinrichtung zur Aufnahme eines Werkzeuges oder eines Werkstückes.

Da die Maschinen-Hohlspindel 3 im Betrieb rotierend angetrieben wird, und zwar durch einen Elektromotor 7, ist es erforderlich, auch die Gewindespindel 5 während des Betriebes in der gleichen Drehrichtung und mit der gleichen Drehzahl anzutreiben, damit keine Relativbewegung zwischen dem mit der Maschinen-Hohlspindel 3 rotierenden Hohlschaft 4 und der Gewindespindel 5 eintreten kann.

Zu diesem Zweek ist vorgesehen, den die Gewindespindel 5 letztendlich antreibenden Rotor 8 des Elektromotors 2 mit dem etektromotorischen Antrieb der Maschinen-Hohlwelle 3 zu synchronisieren. Die Synchronisation erfolgt über eine Steuerung 9, welche einen ständigen Drehwinkelvergleich zwischen der Maschinen-Hohlwelle 3 einerseits und dem Rotor 8 des Elektromotors 2 andererseits durchführt. Hierzu ist ein erster Encoder 10 zu Erfassung des jeweiligen Lage-Ist-Wertes der Maschinen-Hohlspindel 3 und ein zweiter Encoder 11 zur Erfassung des jeweils aktuellen Lage-Ist-Wertes des Rotors 8 vorgesehen. Abhängig von dem Ergebnis dieses Vergleiches kann über die Steuerung 9 die Energiezufuhr zum Stator 12 des Elektromotors 2 variiert und damit ein Synchronlauf zwischen der Gewindespindel 5 und der Maschinen-Hohlspindel 3 erreicht werden.

Die Steuerung 9 ist dabei so ausgelegt, dass die Drehzahl des Rotors 8 des die Gewindespindel 5 letztendlich antreibenden Elektromotors 2 kurzzeitig bzw. für eine bestimmte Anzahl von Umdrehungen gegenüber der Drehzahl der Maschinen-Hohlwelle 3 erhöht oder verringert werden kann, so dass in diesem Falle eine erwünschte Axialverschiebung des Hohlschaftes 4 erfolgt. Diese Auslegung der Steuerung 9 macht es möglich, einen Werkstück- oder Werkzeug-Wechsel auch bei laufender Werkzeugmaschine unter Drehzahl vornehmen zu können.

Der Stator 13 des Elektromotors 2 ist ortsfest angeordnet, so dass die Strom- oder Energiezufuhr zum Elektromotor 2 problemlos und ohne die Verwendung von Schleifringen erfolgen kann.

Die Drehachse des Elektromotors 2 ist gegenüber der Drehachse der Gewindespindel 5 parallel verschoben und die Kraftübertragung vom Elektromotor 2 zur Gewindespindel 5 bzw. dem der Gewindespindel 5 vorgeschalteten Getriebe 6 erfolgt über einen Riementrieb, vorzugsweise einen Zahnriementrieb 14.

Diese Konstruktionsweise ermöglicht es, eine freie Durchgangsbohrung durch das Zentrum der Maschinen-Hohlspindel 3 zu erreichen, darüber hinaus kann der E-lektromotor 2 zum Antrieb der Gewindespindel 5 bei entsprechend beengten Raumverhältnissen auch gegenüber dem unmittelbaren Montagebereich zur Gewindespindel 5 versetzt angeordnet sein. Es ist also eine flexiblere Konstruktion der Spannvorrichtung erreicht, um diese Spannvorrichtung an die baulichen Gegebenheiten einer Werkzeugmaschine anpassen zu können.

Über die Steuerung 9 kann die Gewindespindel 5 tendenziell auf ein gewünschtes Maß bezüglich des angestrebten Spanndrehmomentes korrigiert werden, um dieses Spanndrehmoment unter den unterschiedliehsten Betriebsbedingungen garantiert aufrechterhatten zu können.

Die erfindungsgemäße Spannvorriehtung zeichnet sich durch einen einfachen und störunanfälligen Aufbau aus und gewährleistet auch einen störungsfreien Betrieb, da durch den Synchronlauf des Spannantriebes mit der Maschinen-Hohlspindel 3 keine Beschleunigungskräfte von der Maschinen-Hohlspindel 3 auf den Spannantrieb übertragen werden können.

## Patentansprüche

1. Spannvorrichtung (1) einer Werkzeugmaschine mit einem durch einen Elektromotor (2) betätigbaren Spannantrieb zur axialen Verschiebung eines eine elektromotorisch antreibbare Maschinen-Hohlspindel (3) durchtretenden Hohlschaftes (4), der innerhalb der Maschinen-Hohlspindel (3) verdrehsicher, aber axial verschiebbar gelagert ist, wobei der Hohlschaft (4) über eine Gewindespindel (5) axial verstellbar und die Gewindespindel (5) über einen Elektromotor (2) antreibbar ist, dessen Stator (13) ortsfest und dessen umlaufender und die Gewindespindel (5) antreibender Rotor (8) mit dem elektromotorischen Antrieb(7) der Maschinen-Hohlspindel (3) synchronisiertist, **dadurch gekennzeichnet, dass** die Drehachsen der Gewindespindel (5) und des Elektromotors (2) parallel gegeneinander verschoben sind und dass zwischen dem Elektromotor (2) und der Gewindespindel (5) ein Riementrieb, vorzugsweise ein Zahnriementrieb (14), vorgesehen ist.

2. Spannvorrichtung nach Anspruch 1, **dadurch gekennzeichnet, dass** die Synchronisation durch eine Steuerung (9) mit einem ständigen Drehwinkelvergleich zwischen der Maschinen-Hohlspindel (3) und dem Rotor (8) des Elektromotors (2) und eine hiervon abhängige Veränderung der Energiezufuhr zum Elektromotor (2) erfolgt.

3. Spannvorrichtung nach Anspruch 1 oder 2, **dadurch gekennzeichnet, dass** für den ständigen Drehwinkelvergleich zwei Encoder (10, 11) einmal zur Erfassung der Lage-Ist-Werte der Maschinen-Hohlspindel (3) und einmal zur Erfassung der Lage-Ist-Werte des Rotors (8) vorgesehen sind.

4. Spannvorrichtung nach einem der vorhergehenden Ansprüche, **dadurch gekennzeichnet, dass** über die Steuerung (9) die Drehzahl des Rotors (8) des Elektromotors (2) kurzzeitig bzw, für eine vorbestimmte Anzahl von Umdrehungen gegenüber der Drehzahl der Maschinen-Hohlspindel (3) erhöht oder verringert werden kann.

5. Spannvorrichtung nach einem der vorhergehenden Ansprüche, **dadurch gekennzeichnet, dass** zwischen der Gewindespindel (5) und dem Elektromotor (2) ein Getriebe (6) angeordnet ist.

## Claims

1. Clamping device (1) of a machine tool, having a clamping drive which can be actuated by an electric motor (2) and is intended for axially displacing a hollow shank (4) which passes through a hollow machine spindle (3), which can be driven electromotively, and is mounted inside the hollow machine spindle (3) in a rotationally locked but axially displaceable manner, wherein the hollow shank (4) can be axially adjusted via a threaded spindle (5), and the threaded spindle (5) can be driven via an electric motor (2), the stator (13) of which is in a fixed position and the revolving rotor (8) of which, driving the threaded spindle (5), is synchronized with the electromotive drive (7) of the hollow machine spindle (3), **characterized in that** the rotation axes of the threaded spindle (5) and of the electric motor (2) are displaced parallel to one another, and **in that** a belt drive, preferably a toothed belt drive (14), is provided between the electric motor (2) and the threaded spindle (5).

2. Clamping device according to Claim 1, **characterized in that** the synchronization is effected by a controller (9) having constant rotary angle comparison between the hollow machine spindle (3) and the rotor (8) of the electric motor (2), and a change, dependent thereon, in the power supply to the electric motor (2) is effected.

3. Clamping device according to Claim 1 or 2, **characterized in that** two encoders (10, 11), one for detecting the actual position value of the hollow machine spindle (3) and one for detecting the actual position value of the rotor (8), are provided for the constant rotary angle comparison.

4. Clamping device according to one of the preceding claims, **characterized in that** the speed of the rotor (8) of the electric motor (2) can be increased or reduced briefly or for a predetermined number of revolutions relative to the speed of the hollow machine spindle (3) via the controller (9).

5. Clamping device according to one of the preceding claims, **characterized in that** a transmission (6) is arranged between the threaded spindle (5) and the electric motor (2).

## Revendications

1. Dispositif de serrage (1) d'une machine-outil avec une commande de serrage actionnable par un moteur électrique (2) en vue du déplacement axial d'une tige creuse (4) passant à travers une broche creuse de machine (3) commandable par moteur électrique, ladite tige creuse étant logée avec blocage en rotation, mais déplaçable axialement à l'intérieur de la broche creuse de machine (3), dans lequel la tige creuse (4) est réglable axialement par l'intermédiaire d'une broche filetée (5) et la broche filetée (5) est commandable par l'intermédiaire d'un moteur électrique (2), dont le stator (13) est stationnaire et dont le rotor (8) tournant et commandant la broche filetée (5) est synchronisée avec la commande par moteur électrique (7) de la broche creuse de machine (3), **caractérisé en ce que** les axes de rotation de la broche filetée (5) et du moteur électrique (2) sont décalés parallèlement l'un par rapport à l'autre et **en ce qu'**une transmission par courroie, de préférence une transmission par courroie dentée (14), est prévue entre le moteur électrique (2) et la broche filetée (5).

2. Dispositif de serrage selon la revendication 1, **caractérisé en ce que** la synchronisation, ainsi qu'une modification en dépendant de l'alimentation en énergie vers le moteur électrique (2), est effectuée grâce à une commande (9) avec une comparaison continuelle d'angle de rotation entre la broche creuse de machine (3) et le rotor (8) du moteur électrique (2).

3. Dispositif de serrage selon la revendication 1 ou 2, **caractérisé en ce que** deux encodeurs (10, 11) sont prévus pour la comparaison continuelle d'angle de rotation, une fois en vue de l'acquisition des valeurs effectives de position de la broche creuse de machine (3) et une fois en vue de l'acquisition des valeurs effectives de position du rotor (8).

4. Dispositif de serrage selon l'une quelconque des revendications précédentes, **caractérisé en ce que** le régime du rotor (8) du moteur électrique (2) peut être augmenté ou réduit par l'intermédiaire de la commande (9), momentanément ou pour un nombre prédéfini de tours par rapport au régime de la broche creuse de machine (3).

5. Dispositif de serrage selon l'une quelconque des revendications précédentes, **caractérisé en ce qu'**un mécanisme de transmission (6) est agencé entre la broche filetée (5) et le moteur électrique (2).
